(19) **Europäisches Patentamt**
**European Patent Office**
**Office européen des brevets**

(11) **EP 1 743 682 A1**

(12) **EUROPEAN PATENT APPLICATION**
published in accordance with Art. 158(3) EPC

(43) Date of publication:
**17.01.2007 Bulletin 2007/03**

(51) Int Cl.:
***A63F 13/00*** (2006.01)

(21) Application number: **05737185.8**

(22) Date of filing: **27.04.2005**

(86) International application number:
**PCT/JP2005/008021**

(87) International publication number:
**WO 2005/105240 (10.11.2005 Gazette 2005/45)**

(84) Designated Contracting States:
**DE FR GB**

(30) Priority: **28.04.2004 JP 2004134629**

(71) Applicant: **Konami Digital Entertainment Co., Ltd.**
**Tokyo 106-6114 (JP)**

(72) Inventors:
• **AKITA, Manabu,**
**c/o Konami Digital Entertainment Co**
**Minato-ku,**
**Tokyo 106-6114 (JP)**
• **YAMADA, Michio**
**c/o Konami Digital Entertainment Co**
**Minato-ku,**
**Tokyo 106-6114 (JP)**

• **ITO, Yutaka,**
**c/o Konami Digital Entertainment Co**
**Minato-ku,**
**Tokyo 106-6114 (JP)**
• **OKUBO, Takeshi**
**c/o Konami Digital Entertainment Co**
**Minato-ku,**
**Tokyo 106-6114 (JP)**

(74) Representative: **Rüger, Barthelt & Abel**
**Patentanwälte**
**Postfach 10 04 61**
**73704 Esslingen (DE)**

(54) **IMAGE PRODUCING DEVICE, ACCELERATION DISPLAYING METHOD, AND PROGRAM**

(57) An operation input reception unit (201) receives an operation input for a virtual vehicle. A running condition managing unit (203) manages the running conditions of the virtual vehicle based on the received operation input. An acceleration calculation unit (205) calculates an acceleration in a front or back direction caused by an inertia force in a case where a managed running condition is acceleration/deceleration, and calculates an acceleration in the left or right direction caused by a centrifugal force in a case where a managed running condition is turning. A meter producing unit (206) produces a meter image showing the direction and level of acceleration based on the acceleration calculated by the acceleration calculation unit (205). A display control unit (207) synthesizes a view field image produced by an image producing unit (204) and the meter image produced by the meter producing unit (206), and displays the image on an external monitor or the like.

FIG. 2

**EP 1 743 682 A1**

## Description

Technical Field

The present invention relates to an image producing device, an acceleration displaying method, and a program which are suitable for appropriately visualizing the acceleration, etc. which occur along with running conditions (moving conditions) of a moving object in a virtual space.

Background Art

Conventionally, game devices for business use and home use have been widely spread. With such a game device, for example, one can enjoy a race game by a vehicle such as a car, etc.

In such a race game, for example, the player typically operates a controller or the like, and drives an F 1 machine, a stock car, or the like, which runs in a virtual space, to the goal point, vying with other vehicles for earlier arrival.

Recently, such a race game has also been known, where the engine output, the suspension stiffness, and the tire performances, etc. are factored so that one can drive a vehicle with a near feeling that occurs when driving a real vehicle.

Further, such a technique has also been disclosed, which connects a plurality of game devices by a transmission line, for a multi-played racing game (for example, see Patent Literature 1).

Patent Literature 1: Unexamined Japanese Patent Application KOKAI Publication No. H7-185133 (pp. 3-6, FIG. 3)

Disclosure of Invention

Problem to be Solved by the Invention

However, conventional race games have required the players driving the vehicle to have some proficiency.

For example, in cornering, there have occurred cases that the vehicle spins or goes greatly astray from the race course, unless the velocity and the turning radius (turning degree) are taken into consideration. This is because an acceleration that is reverse to the turning direction works upon the vehicle since a centrifugal force acts when the vehicle turns at a corner, and if the acceleration exceeds the tire grip, etc., a spin or the like occurs.

Therefore, the player gives many tries to cornering to attempt to learn the balance between velocity and rotation radius that would not cause a spin or the like.

Nevertheless, since the conventional game devices cannot appropriately inform the player that an acceleration along with a turn is occurring, etc. during the race game, it has been difficult for the player to learn the balance between velocity and turning radius at the time of cornering.

Thus, many players have requested visualization of an acceleration, etc. that occur along with a turn.

The present invention was made in view of the above-described circumstance, and an object of the present invention is to provide an image producing device, an acceleration displaying method, and a program which can appropriately visualize an acceleration, etc. that occur along with a running condition (moving condition) of a moving object in a virtual space.

Means for Solving the Problem

An image producing device according to a first aspect of the present invention comprises an operation input reception unit, a moving condition managing unit, an acceleration calculation unit, a meter image producing unit, and a display unit, which are configured as follows.

First, the operation input reception unit receives an operation input for a virtual moving object to be moved in a virtual space. And the moving condition managing unit manages a moving condition of the moving object based on the received operation input.

The acceleration calculation unit calculates an acceleration of the moving object based on the managed moving condition. And the meter image producing unit produces a meter image which shows at least a direction and a level of acceleration, based on the calculated acceleration. Then, the display unit displays the produced meter image.

That is, since a meter image indicating the acceleration is displayed according to the moving condition, the player can recognize the acceleration produced by his/her own operation, and its level.

As a result, it is possible to appropriately visualize the acceleration, etc. that occur along with the moving conditions of the moving object.

An image producing device according to a second aspect of the present invention comprises an image information storage unit, an operation input reception unit, a moving condition managing unit, an acceleration calculation unit, a meter image producing unit, a view field image producing unit, and a display unit, which are configured as follows.

First, the image information storage unit stores image information which defines a scenery image to be laid out in a virtual space. And the operation input reception unit receives an operation input for a virtual moving object to be moved in the virtual space. Then, the moving condition managing unit manages a moving condition of the moving object, based on the received operation input.

The acceleration calculation unit calculates an acceleration of the moving object, based on the managed moving condition. And the meter image producing unit produces a meter image which shows at least a direction and a level of acceleration, based on the calculated acceleration. Further, the view field image producing unit produces a view field image seen from a viewpoint of the moving object, based on the stored image information and the managed moving condition. Then, the display unit synthesizes the produced meter image with the produced view field image, and displays the synthesized image.

That is, since a meter image showing the acceleration is displayed according to the moving condition, the player can recognize the acceleration produced by his/her own operation, and its level.

As a result, it is possible to appropriately visualize the acceleration, etc. that occur along with the moving conditions of the moving object.

The image producing device according described above may further comprise a load calculation unit and a display control unit, the load calculation unit may calculate a load to be imposed on a virtual driver based on the managed moving condition, and the display control unit may change a display manner of the produced view field image based on the calculated load.

In this case, since the load to be imposed on oneself is appropriately visualized according to the moving condition, the entertainingness can further be improved.

The meter image producing unit may produce a meter image which shows at least an acceleration in a left or right direction.

In this case, an acceleration, etc. that occur in turning at a corner, etc. can be appropriately visualized.

An acceleration displaying method according to a third aspect of the present invention comprises an operation input receiving step, a moving condition managing step, an acceleration calculating step, a meter image producing step, and a displaying step, which are configured as follows.

First, at the operation input receiving step, an operation input for a virtual moving object to be moved in a virtual space is received. And at the moving condition managing step, a moving condition of the moving object is managed based on the received operation input.

At the acceleration calculating step, an acceleration of the moving object is calculated based on the managed moving condition. And at the meter image producing step, a meter image showing at least a direction and a level of acceleration is produced based on the calculated acceleration. Then, at the displaying step, the produced meter image is displayed on a predetermined display unit.

That is, since a meter image showing the acceleration is displayed according to the moving condition, the player can recognize the acceleration produced by his/her own operation, and its level.

As a result, it is possible to appropriately visualize the acceleration, etc. that occur along with the moving conditions of the moving object.

A program according to a fourth aspect of the present invention is configured to control a computer (including an electronic apparatus) to function as the above-described image producing device.

This program can be stored on a computer-readable information recording medium such as a compact disk, a flexible disk, a hard disk, a magneto optical disk, a digital video disk, a magnetic tape, a semiconductor memory, etc.

The above-described program can be distributed and sold via a computer communication network, independently from a computer on which the program is executed. Further, the above-described information recording medium can be distributed and sold independently from the computer.

Effect of the Invention

According to the present invention, it is possible to appropriately visualize an acceleration, etc. that occur along with running conditions (moving conditions) of a moving object in a virtual space.

Brief Description of Drawings

[FIG. 1] It is an exemplary diagram showing a schematic structure of a typical game device on which an image producing device according to an embodiment of the present invention is realized.

[FIG. 2] It is an exemplary diagram showing an example of a schematic structure of the image producing device according to the embodiment of the present invention.

[FIG. 3A] It is an exemplary diagram showing an example of information managed by a running condition managing unit of the image producing device.

[FIG. 3B] It is an exemplary diagram showing a example of information managed by the running condition managing unit of the image producing device.

[FIG. 4] It is an exemplary diagram showing an example of a view field image drawn by an image producing unit of the image producing device.

[FIG. 5A] It is an exemplary diagram showing an example of a meter image.

[FIG. 5B] It is an exemplary diagram for explaining color emission by symbols along with the level of acceleration.

[FIG. 5C] It is an exemplary diagram for explaining color emission by symbols along with the level of acceleration.

[FIG. 6] It is an exemplary diagram showing an example of a display image to be produced.

[FIG. 7] It is a flowchart showing the flow of control of an acceleration displaying process performed by the image producing device.

[FIG. 8A] It is an exemplary diagram showing an example of a display image.

[FIG. 8B] It is an exemplary diagram showing an example of a display image.

[FIG. 8C] It is an exemplary diagram showing an example of a display image.

[FIG. 8D] It is an exemplary diagram showing an example of a display image.

[FIG. 9] It is an exemplary diagram showing an example of a schematic structure of an image producing device according to another embodiment of the present invention.

[FIG. 10A] It is an exemplary diagram showing an example of a mask image drawn by a mask drawing unit.

[FIG. 10B] It is an exemplary diagram showing an example of a mask image drawn by the mask drawing unit.

[FIG. 10C] It is an exemplary diagram showing an example of a mask image drawn by the mask drawing unit.

[FIG. 10D] It is an exemplary diagram showing an example of a mask image drawn by the mask drawing unit.

[FIG. 10E] It is an exemplary diagram showing an example of a mask image drawn by the mask drawing unit.

[FIG. 11] It is an exemplary diagram for explaining a display area and a mask area arranged in a frame buffer.

[FIG. 12] It is an exemplary diagram showing an example of a display image on which a view field image and a mask image are synthesized.

[FIG. 13A] It is an exemplary diagram showing an example of a display image.

[FIG. 13B] It is an exemplary diagram showing an example of a display image.

[FIG. 13C] It is an exemplary diagram showing an example of a display image.

[FIG. 14] It is an exemplary diagram showing an example of a meter image including symbols indicating a limit.

Explanation of Reference Numerals

| 100 | game device |
| 101 | CPU |
| 102 | ROM |
| 103 | RAM |
| 104 | interface |
| 105 | controller |
| 106 | external memory |
| 107 | DVD-ROM drive |
| 108 | image processing unit |
| 109 | audio processing unit |
| 110 | NIC |
| 200 | image producing device |
| 201 | operation input reception unit |
| 202 | image information storage unit |
| 203 | running condition managing unit |
| 204 | image producing unit |
| 205 | acceleration calculation unit |

| 206 | meter producing unit |
| 207 | display control unit |
| 401 | load calculation unit |
| 402 | mask drawing unit |
| 403 | frame buffer |
| 404 | display control unit |

Best Mode for Carrying Out the Invention

The embodiments of the present invention will be explained below. Embodiments in which the present invention is applied to a game device will be explained below in order to facilitate understanding. However, the present invention can likewise be applied to information processing apparatuses such as computers of various types, PDAs, portable telephones, etc. That is, the embodiments to be explained below are intended for explanation, not to limit the scope of the present invention. Accordingly, though those having ordinary skill in the art could employ embodiments in which each element or all the elements of the present embodiments are replaced with equivalents of those, such embodiments will also be included in the scope of the present invention.

(Embodiment 1)

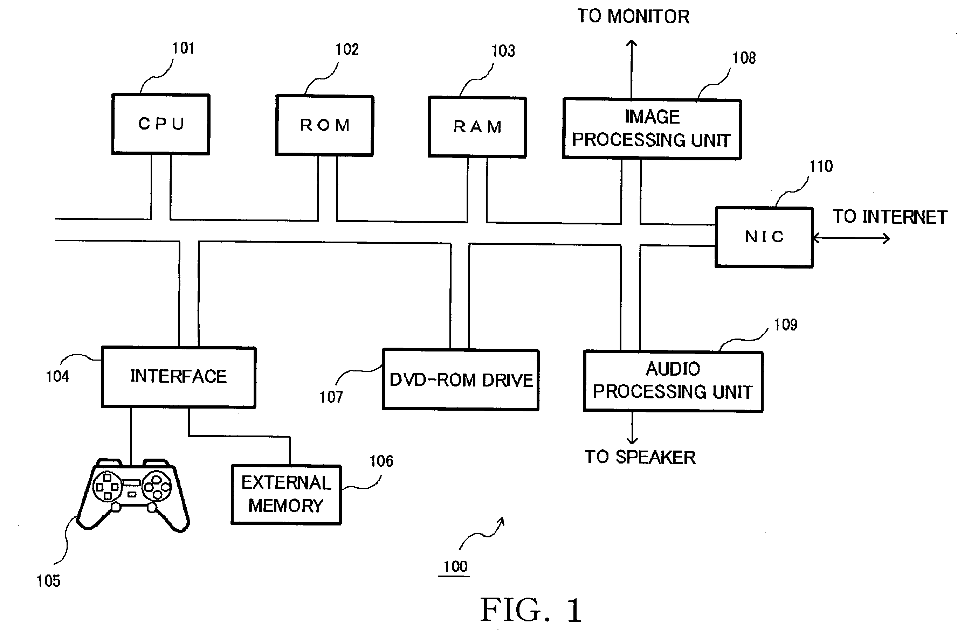

FIG. 1 is an exemplary diagram showing a schematic structure of a typical game device on which an image producing device according to the embodiment of the present invention will be realized. The following explanation will be given with reference to this diagram.

A game device 100 comprises a CPU (Central Processing Unit) 101, a ROM (Read Only Memory) 102, a RAM (Random Access Memory) 103, an interface 104, a controller 105, an external memory 106, a DVD (Digital Versatile Disk)-ROM drive 107, an image processing unit 108, an audio processing unit 109, and an NIC (Network Interface Card) 110.

By loading a DVD-ROM storing a game program and data onto the DVD-ROM drive 107 and turning on the power of the game device 100, the program will be executed and the image producing device according to the present embodiment will be realized.

The CPU 101 controls the operation of the entire game device 100, and is connected to each element to exchange control signals and data.

The ROM 102 stores an IPL (Initial Program Loader) to be executed immediately after the power is turned on, execution of which triggers the program stored on the DVD-ROM to be read into the RAM 103 and executed by the CPU 101. Further, the ROM 102 stores a program and various data for an operating system necessary for controlling the operation of the entire game device 100.

The RAM 103 is for temporarily storing data and programs, and retains the program and data read out from the DVD-ROM, and other data necessary for game proceedings and chat communications.

The controller 105 connected through the interface 104 receives an operation input given by the user when playing the game. The controller 105 includes direction keys, selection keys, etc.

The external memory 106 detachably connected through the interface 104 rewritably stores data indicating the progress status of the game, data of chat communication logs (records). The user can store these data on the external memory 106 where needed, by inputting instructions through the controller 105.

The DVD-ROM to be loaded on the DVD-ROM drive 107 stores a program for realizing the game and image data and audio data accompanying the game. Under the control of the CPU 101, the DVD-ROM drive 107 performs a reading process on the DVD-ROM loaded thereon to read out a necessary program and data, which are to be temporarily stored on the RAM 103, etc.

The image processing unit 108 processes the data read out from the DVD-ROM by means of the CPU 101 and an image calculation processor (unillustrated) provided in the image processing unit 108, and thereafter stores the data in a frame memory (unillustrated) provided in the image processing unit 108. The image information stored in the frame memory is converted into a video signal at a predetermined synchronization timing and output to a monitor (unillustrated) connected to the image processing unit 108. Thereby, image displays of various types are available.

Note that the image calculation processor can rapidly perform transparent operations such as overlay operation or $\alpha$ blending of two-dimensional images, and saturate operations of various types.

Further, the image calculation processor can also rapidly perform an operation for rendering, by a Z buffer method, polygon information placed in a virtual three-dimensional space and having various texture information added, to obtain a rendered image of the polygon placed in the virtual three-dimensional space as seen from a predetermined view position.

The audio processing unit 109 converts audio data read out from the DVD-ROM into an analog audio signal, and outputs the signal from a speaker (unillustrated) connected thereto. Further, under the control of the CPU 101, the audio processing unit 109 generates sound effects and music data to be sounded in the course of the game, and outputs the sounds corresponding to the data from the speaker.

The NIC 110 is for connecting the game device 100 to a computer communication network (unillustrated) such as the Internet, etc., and comprises a 10BASE-T/100BASE-T product used for building a LAN (Local Area Network), an analog modem, an ISDN (Integrated Services Digital Network) modem, or an ADSL (Asymmetric Digital Subscriber Line) modem for connecting to the Internet by using a telephone line, a cable modem for connecting to the Internet by using a cable television line, or the like, and an interface (unillustrated) for intermediating between these and the CPU 101.

Aside from the above, the game device 100 may be configured to perform the same functions as the ROM 102, the RAM 103, the external memory 106, the DVD-ROM to be loaded on the DVD-ROM drive 107, etc. by using a large-capacity external storage device such as a hard disk, etc.

Further, it is also possible to employ an embodiment where a keyboard for accepting a character string editing input from the user, and a mouse for accepting various position designations and selection inputs from the user are connected. Furthermore, a general-purpose personal computer may be used instead of the game device 100 of the present embodiment.

(Schematic Structure of Image Producing Device)

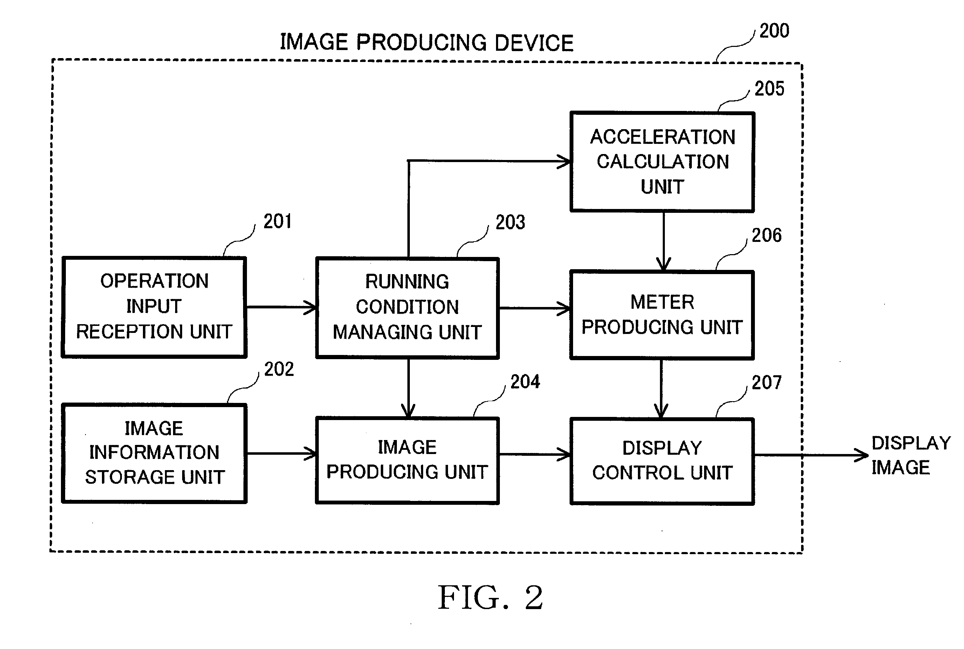

FIG. 2 is an exemplary diagram showing a schematic structure of the image producing device 200 according to the present embodiment. The following explanation will be given with reference to this diagram.

The image producing device 200 comprises an operation input reception unit 201, an image information storage unit 202, a running condition managing unit 203, an image producing unit 204, an acceleration calculation unit 205, a meter producing unit 206, and a display control unit 207.

The explanation will be given to a case that the image producing device 200 is applied to a racing game where a racing car, which runs on a circuit within a virtual space, is operated.

First, the operation input reception unit 201 receives an operation input for a racing car (virtual vehicle) which is to be run on a circuit within a virtual space.

For example, the operation input reception unit 201 receives an operation input for a brake operation, an accelerator operation, a steering wheel operation, and a shifter operation, etc. necessary for running the racing car.

The controller 105 can function as the operation input reception unit 201.

The image information storage unit 202 stores image information which defines scenery images, etc. which include the running path on the circuit within the virtual space. Other than this, the image information storage unit 202 stores image information which defines a plurality of racing cars including the racing car to be operated by the player, and etc.

The DVD-ROM loaded on the DVD-ROM drive 107, the external memory 106, etc. can be function as such an image information storage unit 202.

The running condition managing unit 203 manages the running conditions of the racing car operated by the player, and the running conditions of the other racing cars which are run automatically.

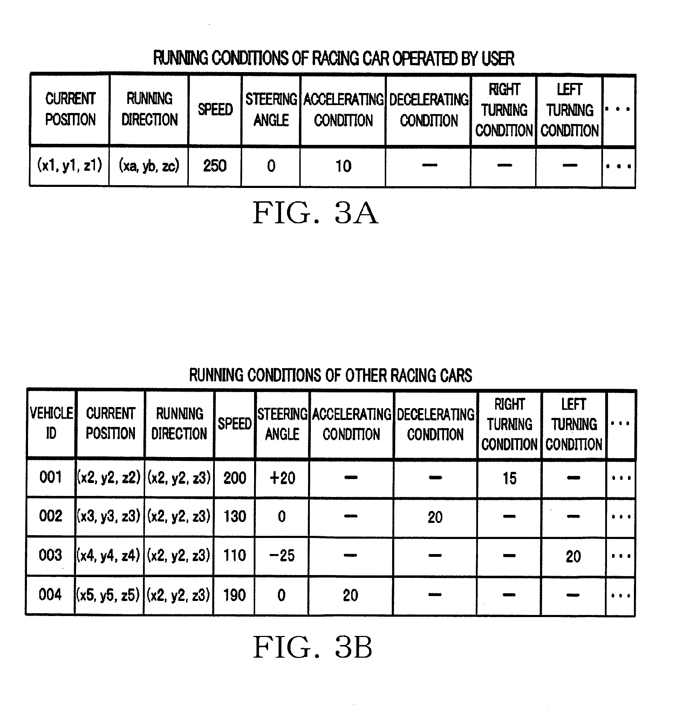

For example, the running condition managing unit 203 manages information which defines the running conditions as shown in FIGS. 3A and 3B.

The information shown in FIG. 3A is information to be updated where necessary, according to operation information of various types sent from the operation input reception unit 201. That is, the running conditions of the racing car operated by the player are managed by the information of FIG. 3A.

The information shown in FIG. 3B is information to be updated automatically based on predetermined logics and parameters. That is, the running conditions of the other racing cars which are run automatically are managed by the information of FIG. 3B.

Further, the running condition managing unit 203 manages contacts and collisions between racing cars, based on the information of FIGS. 3A and 3B.

The CPU 101 can function as such a running condition managing unit 203.

The image producing unit 204 produces the image (image in the proceeding direction) ahead of the racing car operated by the player, based on the image information stored in the image information storage unit 202 and the running conditions managed by the running condition managing unit 203.

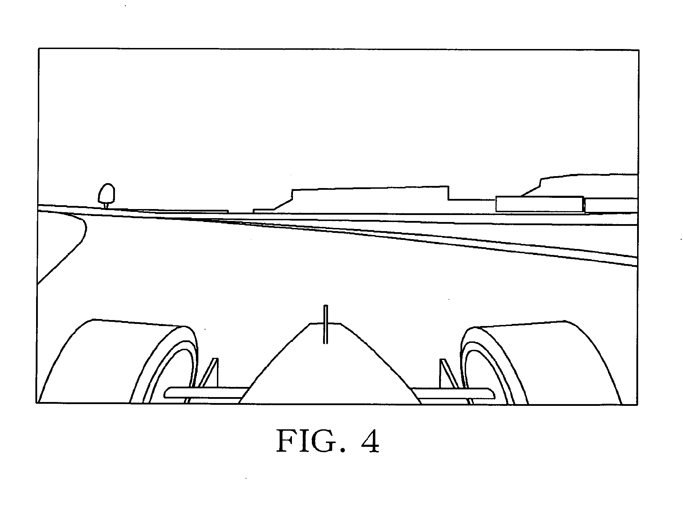

Specifically, the image producing unit 204 depicts a view field image (driver's view) as shown in FIG. 4, which is observed when the view outside the car is seen from the driver's seat of the racing car.

The image processing unit 108 can function as such an image producing unit 204.

The acceleration calculation unit 205 calculates the acceleration (direction and level) of the racing car operated by the player, based on the running conditions managed by the running condition managing unit 203.

For example, in a case where a running condition managed is acceleration/deceleration, the acceleration calculation unit 205 calculates the acceleration in the front or back direction, that occurs due to an inertia force.

Further, in a case where a running condition managed is turning (cornering), the acceleration calculation unit 205 calculates the acceleration in the left or right direction, that occurs due to a centrifugal force. Specifically, the acceleration calculation unit 205 obtains the turning radius from the steering angle, etc., and calculates the acceleration by dividing the second power of the velocity by the turning radius (as an example, see Equation 1).

$$\text{(Equation 1)}$$

$$\alpha = v^2/r$$

v: velocity
r: turning radius

The CPU 101 can function as such an acceleration calculation unit 205.

The meter producing unit 206 produces a meter image for notifying the acceleration calculated by the acceleration calculation unit 205 to the player.

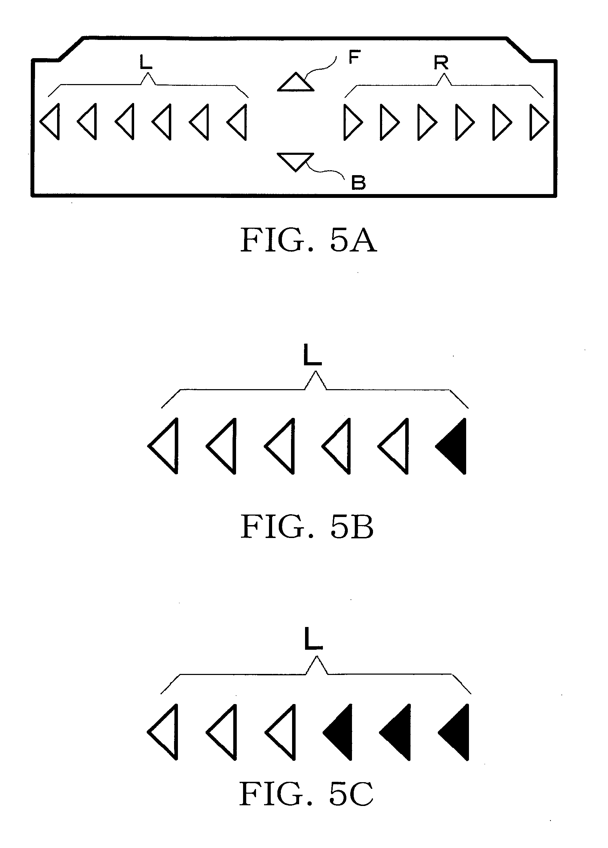

For example, the meter producing unit 206 produces a meter image as shown in FIG. 5A.

The meter image of FIG. 5A includes a symbol F for indicating the acceleration which occurs in the front direction of the racing car, a symbol B for indicating the acceleration which occurs in the back direction of the racing car, a symbol L for indicating the acceleration which occurs in the left direction of the racing car, and a symbol R for indicating the acceleration which occurs in the right direction of the racing car.

The meter producing unit 206 causes the symbol F to emit a predetermined color when an acceleration occurs in the front direction, and causes the symbol B to emit a predetermined color when an acceleration occurs in the back direction. These symbols F and B may be caused to change the color to be emitted according to the level of the acceleration, or may be caused to notify also the level of the acceleration by changing the color shade.

On the other hand, the symbol L comprises a plurality of symbols, unlike the symbols F and B. In a case where an acceleration occurs in the left direction, the meter producing unit 206 causes some of the symbols L to emit a predetermined color according to the level of the acceleration.

For example, in a case where the occurring acceleration is small, one of the symbols L is caused to emit a color as shown in FIG. 5B. Further, in a case where the occurring acceleration is of a middle level, three of the symbols L are caused to emit a color as shown in FIG. 5C. That is, also the level of the acceleration which occurs in the left direction can be notified to the player by the number of color emitting symbols L.

Likewise, the meter producing unit 206 causes some of the symbols R to emit a predetermined color according to the level of an acceleration, when an acceleration occurs in the right direction.

The display control unit 207 appropriately synthesizes the view field image produced by the image producing unit 204 with the meter image produced by the meter producing unit 206, and thereafter converts the synthesized image into a predetermined image signal to display the image on an external monitor or the like.

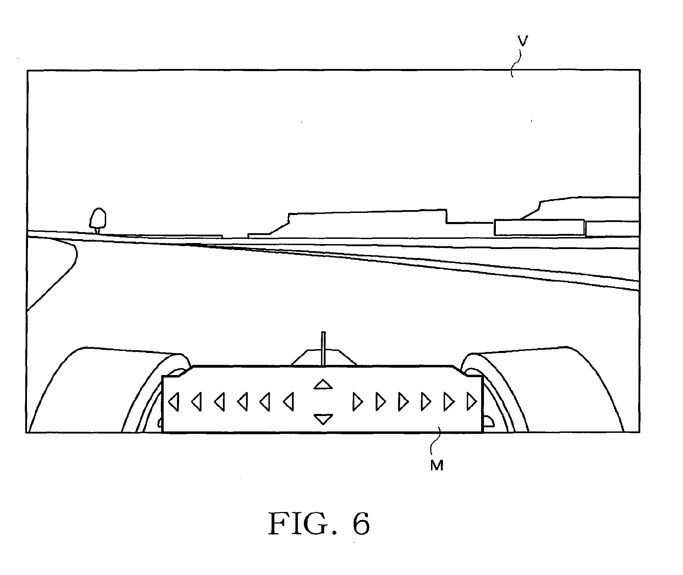

For example, the display control unit 207 produces a display image obtained by synthesizing a view field image V and a meter image M as shown in FIG. 6. Then, the display control unit 207 converts the display image produced in this manner into a video signal at a predetermined synchronization timing, and supplies it to the external monitor or the like.

The image processing unit 108 can function as such a display control unit 207.

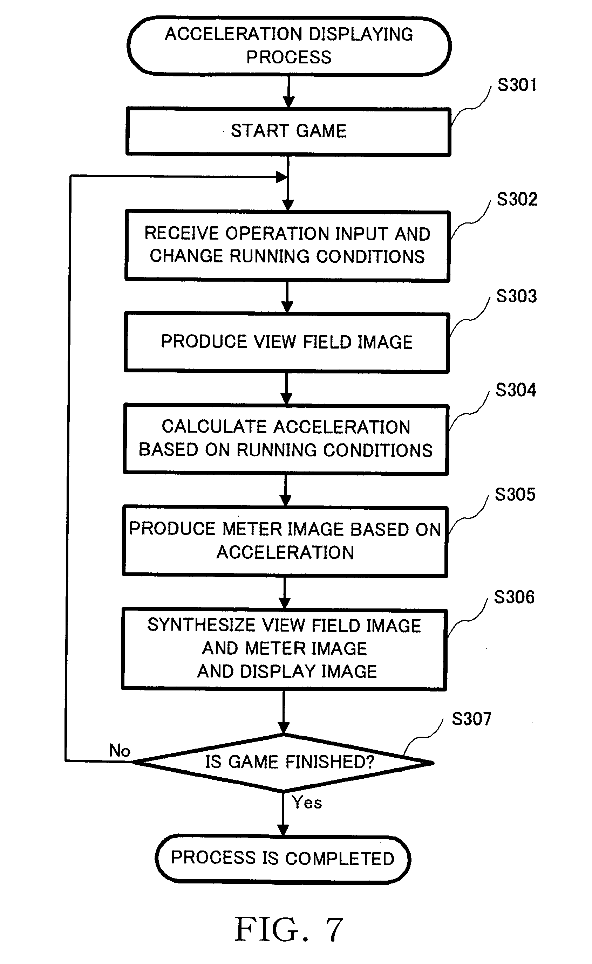

FIG. 7 is a flowchart showing the flow of an acceleration displaying process performed by the image producing device 200. The following explanation will be given with reference to this drawing. Note that this acceleration displaying process will be started, for example, together with progress of the game in playing the car race game.

That is, when the car race game is started (step S301), the image producing device 200 receives an operation input, and updates the running conditions of the racing car (step S302).

That is, when the operation input reception unit 201 receives an accelerator operation, a brake operation, a steering wheel operation, and a shifter operation, etc. of the player, the running condition managing unit 203 updates the running conditions (current position, running direction, velocity, etc.) according to the operations.

The image producing device 200 produces a view field image according to the running conditions (step S303).

That is, the image producing unit 204 produces a view field image (driver's view) based on the image information stored in the image information storage unit 202 and the running conditions managed by the running condition managing unit 203.

The image producing device 200 calculates the acceleration based on the running conditions (step S304).

That is, the acceleration calculation unit 205 calculates the acceleration (direction and level) of the racing car operated by the player, based on the running conditions managed by the running condition managing unit 203.

For example, in a case where a managed running condition is acceleration/deceleration, the acceleration calculation unit 205 calculates the acceleration in the front or back direction that occurs due to an inertia force. Further, in a case where a managed running condition is turning, the acceleration calculation unit 205 calculates the acceleration in the left and right direction that occurs due to a centrifugal force.

The image producing device 200 depicts a meter image based on the calculated acceleration (step S305).

That is, the meter producing unit 206 produces a meter image as shown in FIG. 5A mentioned above, based on the acceleration calculated by the acceleration calculation unit 205. Specifically, the meter producing unit 206 causes the symbols F, B, L, or R to emit a color, according to the direction and level of the acceleration.

The image producing device 200 displays a display image obtained by synthesizing the view field image and the meter image (step S306).

That is, the display control unit 207 appropriately synthesizes the view field image produced by the image producing unit 204 with the meter image produced by the meter producing unit 206, thereafter converts the synthesized image into a predetermined image signal, and displays it on the external monitor or the like.

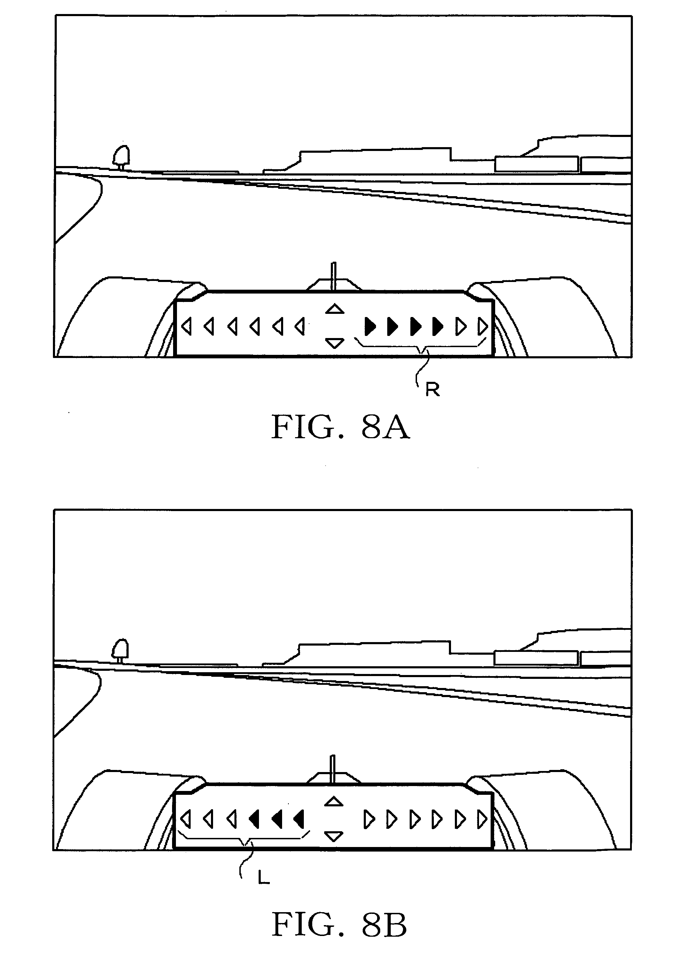

For example, when the racing car operated by the player is turning at a corner to the left, a meter image M in which the symbols R emit color as shown in FIG. 8A is displayed. This shows a state that a centrifugal force occurs along with a left turn and an acceleration in the right direction occurs due to this centrifugal force.

That is, the player can recognize the acceleration occurring in the right direction and its level, by the color emission of the symbols R.

In contrast, when the racing car is turning at a corner to the right, a meter image M in which the symbols L emit color as shown in FIG. 8B is displayed. That is, the player can recognize the acceleration occurring in the left direction and its level, by the color emission of the symbols L.

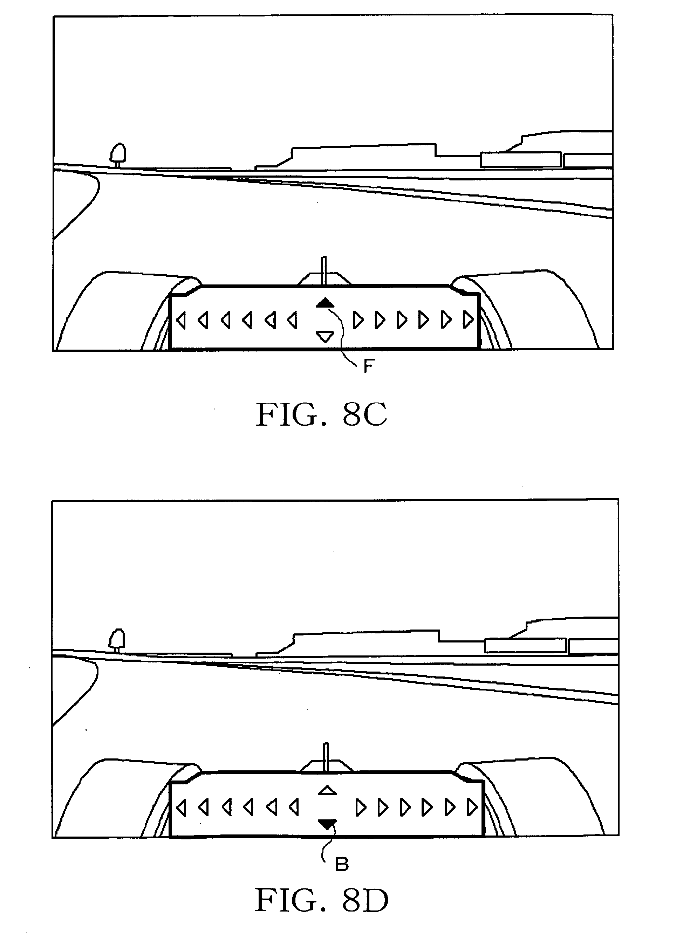

Further, when the racing car operated by the player brakes hard on the course, a meter image M in which the symbol F emits color as shown in FIG. 8C is displayed. That is, the player can recognize the acceleration occurring in the front direction by the color emission of the symbol F.

Further, when the racing car accelerates hard, a meter image in which the symbol B emits color as shown in FIG. 8D is displayed. That is, the player can recognize the acceleration occurring in the back direction by the color emission of the symbol B.

Note that in a case where the symbols F and B are caused to change the color to be emitted or the shade of the color to be emitted according to the level of the acceleration as described above, the player can recognize the acceleration occurring in the front or back direction and its level.

Then, the image producing device 200 determines whether or not the game is finished (step S307).

In a case where it is determined that the game is not finished, the image producing device 200 returns the process to step S302 to repeatedly perform the processes of the above-described steps S302 to S307.

On the other hand, in a case where it is determined that the game is finished, the image producing device 200 completes the acceleration displaying process.

As described above, according to the present embodiment, it is possible to appropriately visualize the acceleration, etc. that occur along with the running conditions (moving conditions) of the moving object in the virtual space.

(Another Embodiment)

In the above-described embodiment, a case has been explained where only the acceleration, which occurs depending on the running conditions of the moving object, is visualized. However, the entertainingness may be improved by visualizing the load imposed on the player depending on the running conditions.

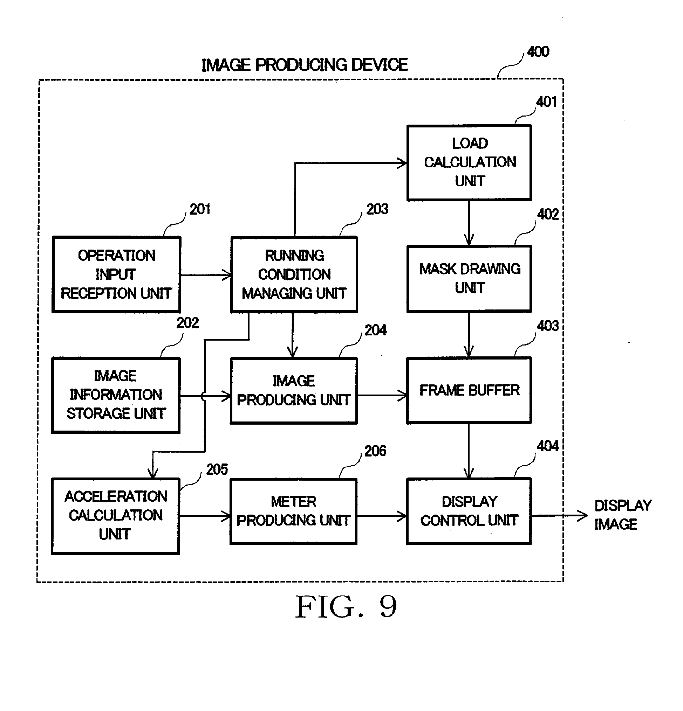

Hereafter, an image producing device (VGS; Visual Gravity System) which also expresses the load imposed on the player will be explained with reference FIG. 9, etc.

FIG. 9 is an exemplary diagram showing a schematic structure of an image producing device 400 according to another embodiment. The image producing device 400 comprises an operation input reception unit 201, an image information storage unit 202, a running condition managing unit 203, an image producing unit 204, an acceleration calculation unit 205, a meter producing unit 206, a load calculation unit 401, a mask drawing unit 402, a frame buffer 403, and a display control unit 404.

Note that the operation input reception unit 201 to the meter producing unit 206 have the same configuration as the above-described image producing device 200 shown in FIG. 2.

The load calculation unit 401 calculates the load (direction and level) imposed on the racing car (to be more specific, the virtual driver) operated by the player, based on the running conditions managed by the running condition managing unit 203.

For example, in a case where a managed running condition is acceleration/deceleration, the load calculation unit 401 calculates the load in the front or back direction that is caused by an inertia force and imposed on the virtual driver, and its level. Specifically, the load calculation unit 401 calculates, from the direction of the acceleration, the direction of the load that is in a reverse direction to that direction, and calculates the level of the load by multiplying the acceleration and the weight (set weight) of the driver (as an example, see Equation 2).

$$(\text{Equation } 2)$$

$$f = m\alpha$$

f: load
m: weight (mass) of the driver
$\alpha$: acceleration

Further, in a case where a managed running condition is turning, the load calculation unit 401 calculates the load in the left or right direction that is caused by a centrifugal force and imposed on the virtual driver, and its level. Specifically, the load calculation unit 401 obtains the turning radius from the steering angle, etc., to calculate the direction toward the center of the circular arc, the direction of the load, and further obtains the angular velocity from the velocity and the turning radius to calculate the level of the load by multiplying the second power of the angular velocity by the turning radius and the weight (set weight) of the driver (as an example, see Equation 3).

$$(\text{Equation } 3)$$

$$f = m\alpha = mr\omega^2$$

f: load
m: weight (mass) of the driver

$\alpha$: acceleration
r: turning radius
$\omega$: angular velocity

The CPU 101 can function as such a load calculation unit 401.

The mask drawing unit 402 produces frame-like mask images for covering the peripheral portions of the view field image produced by the image producing unit 204. At that time, the mask drawing unit 402 produces mask images of different shapes, based on the load (direction and level) calculated by the load calculation unit 401. Then, the mask drawing unit 402 writes the produced mask images in a mask area of the frame buffer 403 to be described later.

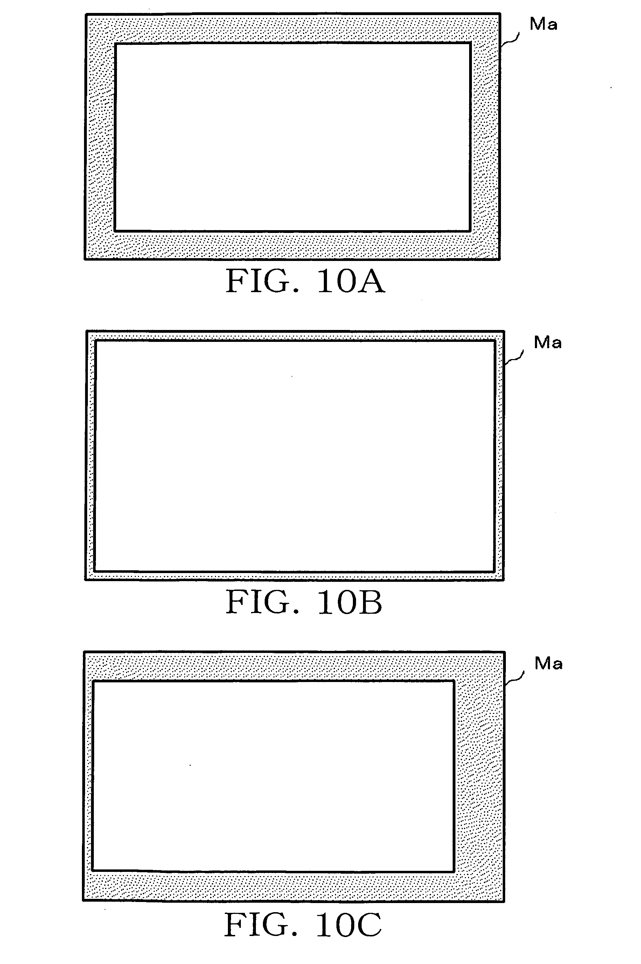

For example, the mask drawing unit 402 produces quadrangular mask images as shown in FIGS. 10A to 10E, that are different in size and position of arrangement.

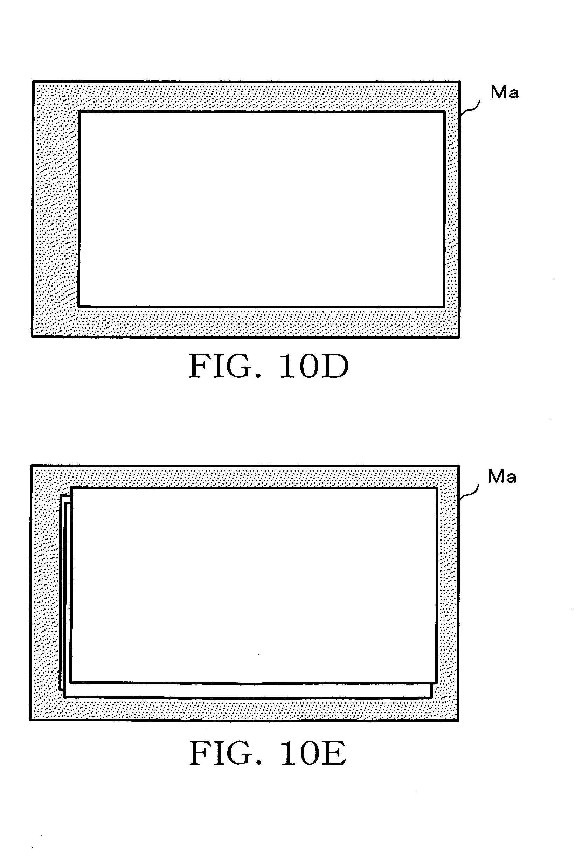

First, the mask image of FIG. 10A is an example that is to be produced in a case where the load works toward the back direction (at the time of constant-velocity running or at the time of accelerated running). Further, the mask image of FIG. 10B is an example that is to be produced in a case where the load works toward the front direction (when decelerating or when making a sudden stop by braking).

The mask image of FIG. 10C is an example that is to be produced in a case where the load works toward the right direction (when making a left turn). Further, the mask image of FIG. 10D is an example that is to be produced in a case where the load works toward the left direction (when making a right turn).

Then, the mask image of FIG. 10E is an example that is to be produced in a case where the load works in the vertical direction (up or down direction) (when running on gravel, etc.).

That is, the mask drawing unit 402 produces the mask image shown in FIG. 10A where the width of the four sides is broadened when the load works toward the back direction, and produces the mask image shown in FIG. 10B where the width of the four sides is narrowed when contrarily the load works toward the front direction.

Further, the mask drawing unit 402 produces the mask image shown in FIG. 10C where the width of the left side is narrowed and the width of the right side is broadened when the load works toward the right direction, and produces the mask image shown in FIG. 10D where the width of the left side is broadened and the width of the right side is narrowed when contrarily the load works toward the left direction.

The image processing unit 108 can function as such a mask drawing unit 402.

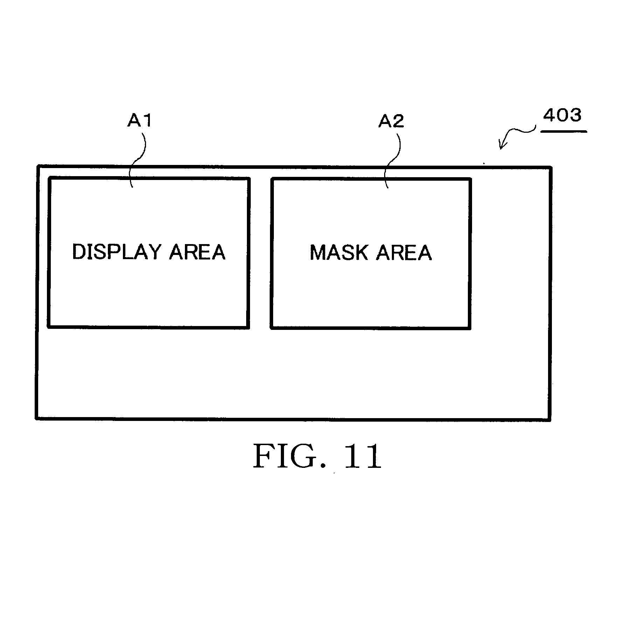

The frame buffer 403 comprises a two-dimensional array memory having a predetermined capacity, and for example, a display area A1 and a mask area A2, etc. are set therein as shown in FIG. 11.

The display area A1 is an area in which the view field image (driver's view) produced by the above-described image producing unit 204 is written.

Further, the mask area A2 is an area in which the mask image produced by the above-described mask drawing unit 402 is written.

The frame memory provided in the image processing unit 108 can function as such a frame buffer 403.

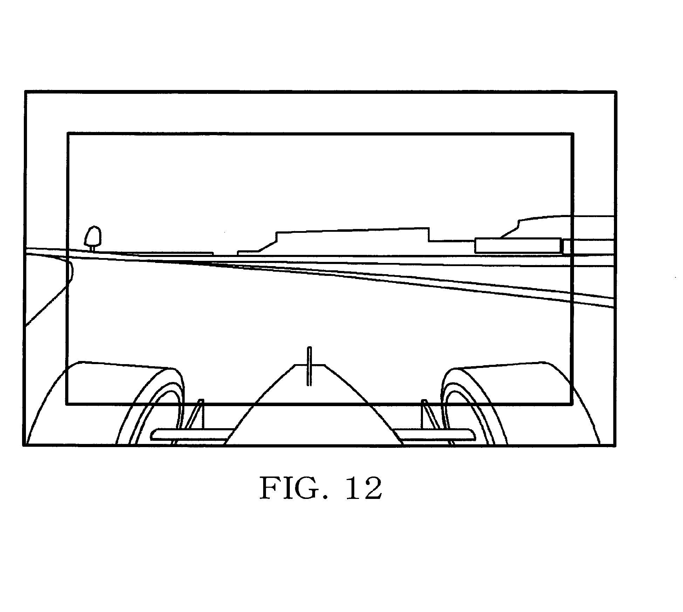

The display control unit 404 appropriately synthesizes the view field image stored in the display area A1 of the frame buffer 403 and the mask image stored in the mask area A2, and thereafter further appropriately synthesizes the meter image produced by the meter producing unit 206. Then, the display control unit 404 converts the synthesized image into a predetermined image signal, and displays it on the external monitor or the like. For example, in a case where the view field image as shown in FIG. 4 mentioned above is written in the display area A1 and the mask image as shown in FIG. 10A is written in the mask area A2, the display control unit 404 synthesizes them by covering the view field image with the mask image, and semi-transparents the peripheral portions of the view field image as shown in FIG. 12.

Note that other than semi-transparenting the peripheral portions as shown in FIG. 12, the display control unit 404 may paint them entirely with a same color, or may make them blurry.

Then, when the display control unit 404 produces a display image by further synthesizing the meter image produced by the meter producing unit 206, it converts the produced display image into a video signal at a predetermined synchronization timing, and supplies it to the external monitor or the like.

The image processing unit 108 can function as such a display control unit 404.

The image producing device 400 having such a structure visualizes the load imposed on the player, also in the following manner.

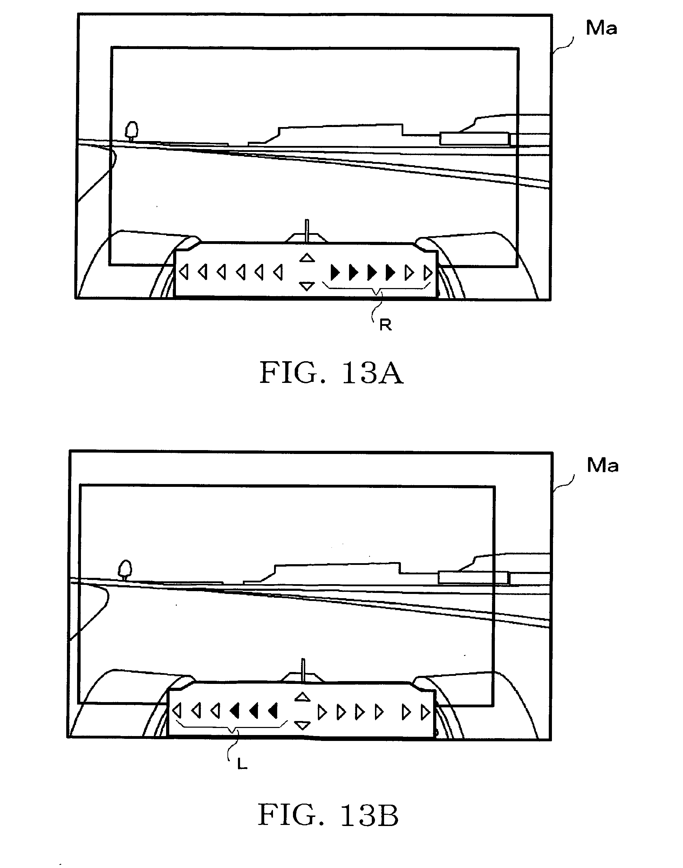

For example, when the racing car operated by the player is turning at a corner to the left, a view field image whose display position is moved to the left is displayed as shown in FIG. 13A. This shows a state that a centrifugal force occurs along with the left turn, and a load is imposed toward the right direction by the centrifugal force.

That is, by the display position being moved to the left, the player can feel a load (horizontal G) in a relatively right direction imposed on him/herself and his/her neck pulled away to the right.

In contrast, when the racing car operated by the player is turning at a corner to the right, a view field image whose display position is moved to the right is displayed as shown in FIG. 13B.

That is, by the display position being moved to the right, the player can feel a load in a relatively left direction imposed on him/herself and his/her neck pulled away to the left.

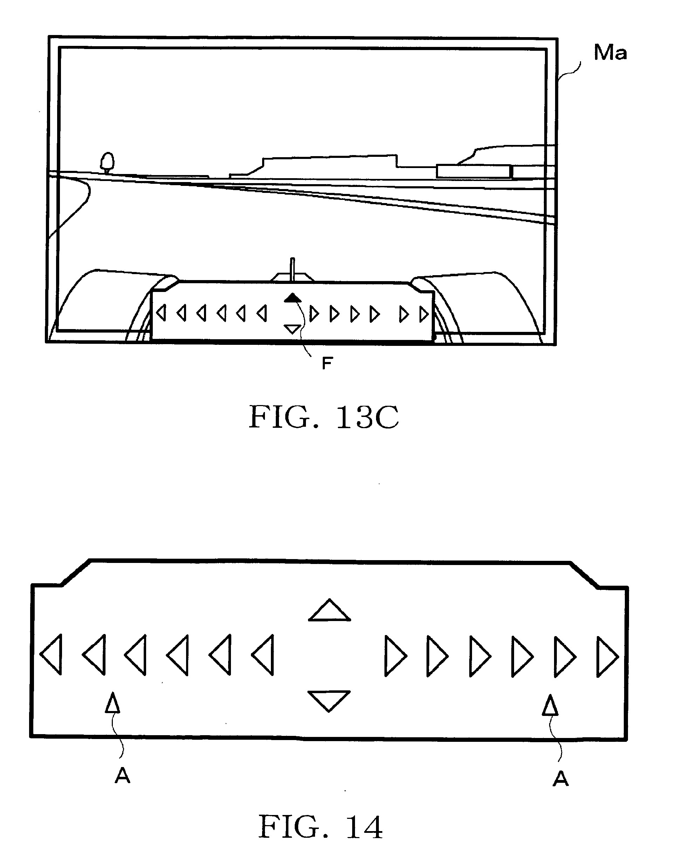

Further, when the racing car operated by the player brakes hard on the course, a view field image whose display area is enlarged is displayed as shown in FIG. 13C. This shows a state that an inertia force occurs along with the deceleration by braking, and a load is imposed toward the front direction by the inertia force.

That is, by the display area being enlarged, the player can feel a load in a relatively front direction imposed on him/herself and his/her neck pulled to the front.

Note that when the accelerator is trod on from this state and the racing car accelerates, a view field image whose display area is shrunk is displayed as shown in FIG. 12 mentioned above. This shows a state that an inertia force occurs along with the acceleration by accelerating, and a load is imposed toward the back direction by the inertia force.

That is, by the display area being shrunk, the player can feel a load in a relatively back direction imposed on him/herself and his/her neck pulled to the back.

It is possible to improve the entertainingness by visualizing also the load imposed on the player depending on the running conditions.

(Another Embodiment)

In the above-described embodiment, a case has been explained where the symbols F, B, L, and R are displayed in the meter image and the direction of the acceleration is notified to the player. However, the limit of the acceleration tolerable for the racing car may be displayed together on the meter image. That is, the player may be notified of such a limit beyond which the racing car would go spinning, etc. with the tire grip, etc. exceeded, if an acceleration beyond the limit occurs.

For example, the meter producing unit 206 calculates limit values that are determined according to the running conditions (the tire grip, the friction factor of the course surface, etc.). Then, the meter producing unit 206 draws symbols A on positions corresponding to the calculated limit values, as shown in FIG. 14.

In this case, the player can operate the racing car while recognizing the level (the color emission by the symbols L or R) of the displayed acceleration and the positions of the symbols A and keeping in mind the limit beyond which a spin, etc. would occur.

The present application claims priority based on Japanese Patent Application No 2004-134629, the content of which is incorporated herein in its entirety.

Industrial Applicability

As explained above, according to the present invention, it is possible to provide an image producing device, an acceleration displaying method, and a program which are suitable for appropriately visualizing an acceleration, etc. that occur along with running conditions (moving conditions) of a moving object in a virtual space.

Claims

1. An image producing device, comprising:

   an operation input reception unit (201) which receives an operation input for a virtual moving object to be moved in a virtual space;
   a moving condition managing unit (203) which manages a moving condition of the moving object based on the received operation input;
   an acceleration calculation unit (205) which calculates an acceleration of the moving object based on the managed moving condition;
   a meter image producing unit (206) which produces a meter image which shows at least a direction and a level of acceleration, based on the calculated acceleration; and
   a display unit (207) which displays the produced meter image.

2. An image producing device, comprising:

   an image information storage unit (202) which stores image information which defines a scenery image to be laid out in a virtual space;
   an operation input reception unit (201) which receives an operation input for a virtual moving object to be moved in the virtual space;
   a moving condition managing unit (203) which manages a moving condition of the moving object, based on the received operation input;
   an acceleration calculation unit (205) which calculates an acceleration of the moving object, based on the managed moving condition;
   a meter image producing unit (206) which produces a meter image which shows at least a direction and a level of acceleration, based on the calculated acceleration;
   a view field image producing unit (204) which produces a view field image seen from a viewpoint of the moving object, based on the stored image information and the managed moving condition; and
   a display unit (207) which synthesizes the produced meter image with the produced view field image, and displays the synthesized image.

3. The image producing device according to claim 2, further comprising
   a load calculation unit (401) and a display control unit (404),
   wherein: said load calculation unit (401) calculates a load to be imposed on a virtual driver, based on the managed moving condition; and
   said display control unit (404) changes a display manner of the produced view field image, based on the calculated load.

4. The image producing device according to claim 1, wherein said meter image producing unit (206) produces a meter image which shows at least an acceleration in a left or right direction.

5. An acceleration displaying method comprising an operation input receiving step (S302), a moving condition managing step (S302), an acceleration calculating step (S304), a meter image producing step (S305), and a displaying step (S306),
   wherein: at said operation input receiving step (S302), an operation input for a virtual moving object to be moved in a virtual space is received;
   at said moving condition managing step (S302), a moving condition of the moving object is managed based on the received operation input;
   at said acceleration calculating step (S304), an acceleration of the moving object is calculated based on the managed moving condition;
   at said meter image producing step (S305), a meter image showing at least a direction and a level of acceleration is produced based on the calculated acceleration; and
   at said displaying step (S306), the produced meter image is displayed on a predetermined display unit.

6. A computer-readable information recording medium which stores a program for controlling a computer to function as an operation input reception unit (201), a moving condition managing unit (203), an acceleration calculation unit (205), a meter image producing unit (206), and a display unit (207),
   wherein: said operation input reception unit (201) receives an operation input for a virtual moving object to be moved in a virtual space;
   said moving condition managing unit (203) manages a moving condition of the moving object based on the received operation input;
   said acceleration calculation unit (205) calculates an acceleration of the moving object based on the managed moving condition;
   said meter image producing unit (206) produces a meter image which shows at least a direction and a level of acceleration, based on the calculated acceleration; and
   said display unit (207) displays the produced meter image.

7. A program for controlling a computer to function as an operation input reception unit (201), a moving condition managing unit (203), an acceleration calculation unit (205), a meter image producing unit (206), and a display unit (207),
   wherein: said operation input reception unit (201) receives an operation input for a virtual moving object to be moved in a virtual space;
   said moving condition managing unit (203) manages a moving condition of the moving object based on the received operation input;
said acceleration calculation unit (205) calculates an acceleration of the moving object based on the managed moving condition;
said meter image producing unit (206) produces a meter image which shows at least a direction and a level of acceleration, based on the calculated acceleration; and
said display unit (207) displays the produced meter image.

FIG. 1

EP 1 743 682 A1

IMAGE PRODUCING DEVICE

200

205 ACCELERATION CALCULATION UNIT

206 METER PRODUCING UNIT

207 DISPLAY CONTROL UNIT

203 RUNNING CONDITION MANAGING UNIT

204 IMAGE PRODUCING UNIT

201 OPERATION INPUT RECEPTION UNIT

202 IMAGE INFORMATION STORAGE UNIT

DISPLAY IMAGE

FIG. 2

### RUNNING CONDITIONS OF RACING CAR OPERATED BY USER

| CURRENT POSITION | RUNNING DIRECTION | SPEED | STEERING ANGLE | ACCELERATING CONDITION | DECELERATING CONDITION | RIGHT TURNING CONDITION | LEFT TURNING CONDITION | · · · |
|---|---|---|---|---|---|---|---|---|
| (x1, y1, z1) | (xa, yb, zc) | 250 | 0 | 10 | — | — | — | · · · |

## FIG. 3A

### RUNNING CONDITIONS OF OTHER RACING CARS

| VEHICLE ID | CURRENT POSITION | RUNNING DIRECTION | SPEED | STEERING ANGLE | ACCELERATING CONDITION | DECELERATING CONDITION | RIGHT TURNING CONDITION | LEFT TURNING CONDITION | · · · |
|---|---|---|---|---|---|---|---|---|---|
| 001 | (x2, y2, z2) | (x2, y2, z3) | 200 | +20 | — | — | 15 | — | · · · |
| 002 | (x3, y3, z3) | (x2, y2, z3) | 130 | 0 | — | 20 | — | — | · · · |
| 003 | (x4, y4, z4) | (x2, y2, z3) | 110 | −25 | — | — | — | 20 | · · · |
| 004 | (x5, y5, z5) | (x2, y2, z3) | 190 | 0 | 20 | — | — | — | · · · |

## FIG. 3B

FIG. 4

FIG. 5A

FIG. 5B

FIG. 5C

FIG. 6

ACCELERATION DISPLAYING
PROCESS

START GAME · — S301

RECEIVE OPERATION INPUT AND
CHANGE RUNNING CONDITIONS — S302

PRODUCE VIEW FIELD IMAGE — S303

CALCULATE ACCELERATION
BASED ON RUNNING CONDITIONS — S304

PRODUCE METER IMAGE BASED ON
ACCELERATION — S305

SYNTHESIZE VIEW FIELD IMAGE
AND METER IMAGE
AND DISPLAY IMAGE — S306

No ◇ IS GAME FINISHED? — S307

Yes

PROCESS IS COMPLETED

FIG. 7

FIG. 8A

FIG. 8B

FIG. 8C

FIG. 8D

IMAGE PRODUCING DEVICE　　　／400

```
┌────────────────────────────────────────────────────────┐
│                                    ┌──────────────┐ 401  │
│                                    │    LOAD      │      │
│                                    │ CALCULATION  │      │
│                                    │    UNIT      │      │
│                                    └──────────────┘      │
│   201            203                      │         402  │
│ ┌──────────┐  ┌──────────┐         ┌──────────────┐      │
│ │OPERATION │  │ RUNNING  │         │ MASK DRAWING │      │
│ │  INPUT   │→ │CONDITION │         │    UNIT      │      │
│ │RECEPTION │  │MANAGING  │         └──────────────┘      │
│ │  UNIT    │  │  UNIT    │                │        403   │
│ └──────────┘  └──────────┘         ┌──────────────┐      │
│   202            204                │ FRAME BUFFER │      │
│ ┌──────────┐  ┌──────────┐         └──────────────┘      │
│ │  IMAGE   │  │  IMAGE   │→                │        404   │
│ │INFORMATION│ │PRODUCING │                             │
│ │ STORAGE  │  │  UNIT    │                             │
│ │  UNIT    │  └──────────┘                             │
│ └──────────┘   205       206        ┌──────────────┐    │
│ ┌──────────┐  ┌──────────┐         │  DISPLAY     │    │
│ │ACCELERATION│ │  METER   │→        │ CONTROL UNIT │→ DISPLAY
│ │CALCULATION│ │PRODUCING │         └──────────────┘   IMAGE
│ │  UNIT    │  │  UNIT    │                             │
│ └──────────┘  └──────────┘                             │
└────────────────────────────────────────────────────────┘
```

FIG. 9

FIG. 10A

Ma

FIG. 10B

Ma

FIG. 10C

Ma

Ma

FIG. 10D

Ma

FIG. 10E

A1                                    A2                              403

┌─────────────────────────────────────────────────────────┐
│  ┌───────────────────┐      ┌───────────────────┐         │
│  │                   │      │                   │         │
│  │   DISPLAY AREA    │      │    MASK AREA      │         │
│  │                   │      │                   │         │
│  └───────────────────┘      └───────────────────┘         │
│                                                           │
│                                                           │
└─────────────────────────────────────────────────────────┘

FIG. 11

FIG. 12

Ma

FIG. 13A

Ma

FIG. 13B

FIG. 13C

FIG. 14

<div align="center">INTERNATIONAL SEARCH REPORT</div>

| | |
|---|---|
| | International application No. |
| | PCT/JP2005/008021 |

| A. CLASSIFICATION OF SUBJECT MATTER |
|---|
| Int.Cl$^7$  A63F13/00 |
| |
| According to International Patent Classification (IPC) or to both national classification and IPC |

| B. FIELDS SEARCHED |
|---|
| Minimum documentation searched (classification system followed by classification symbols) |
| Int.Cl$^7$  A63F13/00-13/12, A63F9/24, G09B9/00-9/52 |
| |
| Documentation searched other than minimum documentation to the extent that such documents are included in the fields searched |
| Jitsuyo Shinan Koho      1922-1996   Jitsuyo Shinan Toroku Koho   1996-2005 |
| Kokai Jitsuyo Shinan Koho   1971-2005   Toroku Jitsuyo Shinan Koho   1994-2005 |
| Electronic data base consulted during the international search (name of data base and, where practicable, search terms used) |
| |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 11-146978 A  (Namco Ltd.), 02 June, 1999 (02.06.99), Full text; Figs. 1 to 8 (Family: none) | 1-7 |
| Y | "Straight Victory -Hoshino Kazuyoshi eno Chosen-", Shukan Fami Tsu, 5 Gatsu 8, 15 Nichi Gappeigo, Vol.13, No.20, whole No.491, Ascii Corp., 15 May, 1998 (15.05.98), page 40 | 1-7 |
| A | JP 2004-113330 A  (Taito Corp.), 15 April, 2004 (15.04.04), Full text; Figs. 1 to 2 (Family: none) | 1-7 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 June, 2005 (15.06.05) | 28 June, 2005 (28.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/008021 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 3165790 B2  (Namco Ltd.),<br>14 May, 2001 (14.05.01),<br>Par. No. [0026]; Fig. 4<br>& US 6059666 A | 1-7 |
| A | JP 7-231985 A  (Sega Enterprises, Ltd.),<br>05 September, 1995 (05.09.95),<br>Full text; Figs. 1 to 7<br>(Family: none) | 1-7 |
| A | JP 2002-170131 A  (Konami Co., Ltd.),<br>14 June, 2002 (14.06.02),<br>Full text; Figs. 1 to 9<br>(Family: none) | 1-7 |
| A | JP 8-7803 B2  (Director General of Technical Research and Development Institute of Defense Agency et al.),<br>29 January, 1996 (29.01.96),<br>Full text; Figs. 1 to 5<br>(Family: none) | 1-7 |
| P,A | JP 3556660 B1  (Konami Co., Ltd.),<br>21 May, 2004 (21.05.04),<br>Full text; Figs. 1 to 9<br>(Family: none) | 1-7 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7185133 A

- JP 2004134629 A